# EUROPÄISCHE PATENTSCHRIFT

(11) **EP 1 128 925 B1**
(45) Veröffentlichungstag und Bekanntmachung des Hinweises auf die Patenterteilung: **24.09.2003**
(21) Anmeldenummer: 99936230.4
(22) Anmeldetag: 19.08.1999
(51) Int. Cl.: B23K 26/00, B21C 37/08

(54) **VERFAHREN ZUM SCHWEISSEN VON ROHREN SOWIE EINRICHTUNG ZU DESSEN DURCHFÜHRUNG**
METHOD FOR WELDING TUBES AND DEVICE FOR CARRYING OUT SAID METHOD
PROCEDE ET DISPOSITIF POUR SOUDER DES TUBES

(30) Priorität: 13.11.1998 CH 228098
(43) Veröffentlichungstag der Anmeldung: 05.09.2001
(73) Patentinhaber: ELPATRONIC AG, 8962 Bergdietikon (CH)
(72) Erfinder: GYSI, Peter, CH-5454 Bellikon (CH)
(86) Internationale Anmeldenummer: CH9900382
(87) Internationale Veröffentlichungsnummer: WO00029163

(56) Entgegenhaltungen:
- EP-A- 0 212 620
- US-A- 2 084 889
- US-A- 4 905 885

## Beschreibung

Die Erfindung betrifft Verfahren zum Schweissen von Rohren gemäss Oberbegriff des Anspruchs 1. Ferner betrifft die Erfindung eine modulare Einrichtung zur Durchführung des Verfahrens gemäss Anspruch 17 sowie ein Vorzentriermodul zur Durchführung des Verfahrens bzw. für die Einrichtung gemäss Anspruch 12.

Es ist bekannt, Rohre stumpf zu schweissen, z.B. mittels Hochfrequenzschweissung. DE-C-44 32 674 zeigt eine spezieile Halteeinrichtung zum Schweissen dünnwandiger Rohre, welche z.B. mittels Laser geschweisst werden. Insbesondere in der Automobil-Industrie besteht zunehmender Bedarf nach dünnwandigen Rohren verschiedenster Dimensionen, welche nach der Schweissung durch Hochdruckverformung zu Karrosseriebauteilen umgeformt werden. Unter dünnwandig werden dabei in der Regel Rohre verstanden, deren Verhältnis von Durchmesser zu Materialdicke grösser als 65 ist. Es besteht dabei Bedarf nach Schweissmaschinen, welche solche Rohre in verschiedenen Dimensionen und Formen und auch in verschiedenen Stückzahlen von einzelnen Versuchsmustern bis zu Serienstückzahlen wirtschaftlich schweissen können. US-A-4 905 855 zeigt ein Verfahren zum Schweissen von Rohlingen zu Rohren, bei welchem ein Werkzeug fester Grösse den Umfang des Rohlings beaufschlagt, um die Längskanten in Anlage zu bringen.

Der Erfindung liegt daher die Aufgabe zugrunde, ein Verfahren zu schaffen, mittels welchem verschiedenste Rohrdimensionen und Rohrformen auf einfache Weise ohne aufwendige Umrüstung der Schweissmaschine zur Schweissung gebracht werden können.

Dies wird mit einem Verfahren gemäss Anspruch 1 erreicht.

Dadurch, dass die Vorpositionierung des Rohlings durch die angetrieben verstellbaren Werkzeuge erfolgt, können eine Vielzahl von Formen und Dimensionen von Rohren geschweisst werden, wobei die jeweilige Anpassung nur durch Verstellen der Werkzeuge ohne deren Auswechslung erfolgen kann.

Bevorzugterweise wird gemäss Anspruch 8 auch beim Schweisswerkzeug durch angetrieben verstellbare Elemente auf die Kantenlage eingewirkt, wodurch die Schweissung, insbesondere die Laserschweissung, mit dafür optimal zueinander liegenden Kanten erfolgen kann.

Der Erfindung liegt ferner die Aufgabe zugrunde, eine möglichst vielseitig für verschiedenste Rohrformen und Dimensionen und zu schweissende Stückzahlen einsetzbare Schweisseinrichtung mit optimalen Schweissergebnissen unter diesen wechselnden Anforderungen zu schaffen.

Dies wird mit einer Einrichtung gemäss Anspruch 17 bzw. mit dem Vorzentriermodul nach Anspruch 12 erreicht.

Dadurch, dass die Einrichtung modular aufgebaut ist und die einzelnen Module auswechselbar und zueinander verstellbar auf einem Träger angeordnet sind, ergibt sich eine optimale Anpassung an die jeweilige zu schweissende Rohrform und Rohrdimensionen. So können je nach Länge des Rohres mehrere Einlaufmodule und Vorpositionierungsmodule vorgesehen sein bzw. solche Module je nach Durchmesserbereich des Rohres rasch gegen angepasste Module ausgetauscht werden. Durch den Austausch des Zentrier- und Schweissmodules können auch verschiedene Schweissmittel auf einfache Weise verwendet werden. Vorzugsweise sind Module auf der Trägereinheit so verschiebbar, dass sie in eine inaktive Warteposition bringbar sind, in der sie den Arbeitsvorgang der aktiven Module nicht stören und aus der sie einfach erneut in die Arbeitsposition bringbar sind.

Durch das Vorzentriermridul mit den Merkmalen des Anspruchs 12 wird es möglich, Rohre verschiedenster Formen auf derselben Einrichtung zu schweissen.

Die bevorzugte Einrichtung nach Anspruch 20 ermöglicht die Einstellung der Kantenlage des Rohlings und damit eine optimale Schweissung verschiedener Rohrformen und Rohrdimensionen.

Besonders dünnwandige Rohre können durch ein bevorzugtes Verfahren gemäss Anspruch 11 bzw. eine Einrichtung gemäss Anspruch 23 geschweisst werden.

Im folgenden werden Ausführungsbeispiele der Erfindung anhand der Figuren näher erläutert. Dabei zeigt
Figur 1 eine Seitenansicht einer modularen Rohrschweisseinrichtung;
Figur 2 eine Vertikalschnittansicht der Einrichtung von Figur 1;
Figur 3 eine weitere Vertikalschnittansicht der Einrichtung von Figur 1;
Figur 4 eine Ansicht eines Vorzentriermoduls;
Figur 5 eine Ansicht des Vorzentriermoduls mit einem Rohling;
Figur 6 eine weitere Ansicht des Vorzentiermoduls mit einem anders geformten Rohling;
Figur 7 eine weitere Ansicht des Vorzentiermoduls mit einem Rohling;
Figur 8 eine schematische schaubildliche Ansicht des Schwertes des Vorzentriermodules;
Figur 9 eine Ansicht des Zentrier- und Schweissmoduls;
Figur 10 eine andere Ausführungsform der der Schweisszone benachbarten Rolle des Zentrier- und Schweissmoduls;
Figur 11 eine Darstellung der Innenabstützung im Schweissbereich, und
Figur 12 eine Seitenansicht der Rohrschweisseinrichtung beim Schweissen konischer Rohre.

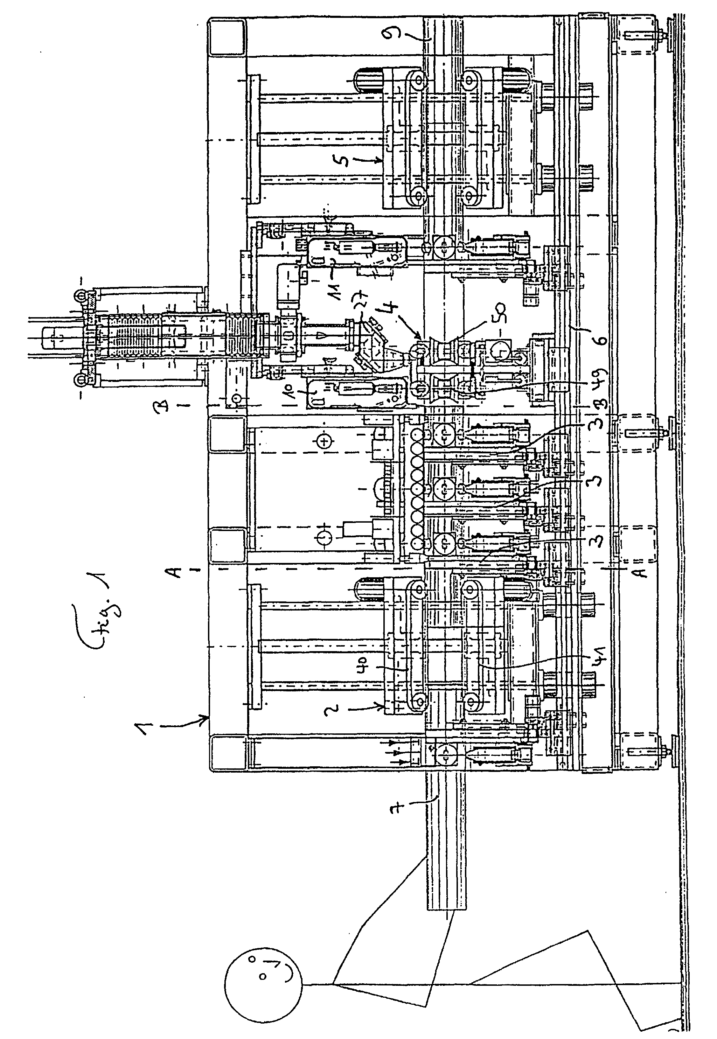

Figur 1 zeigt eine schematische Seitenansicht einer modular aufgebauten Einrichtung 1 zum Verschweissen von vorgebogenen Rohlingen 7 zu Rohren 9. Die Einrichtung ist dabei in Modulbauweise aufgebaut, wobei mehrere Module auf einer gemeinsamen, in der Zeichnung eine Schiene 6 aufweisenden Tragvorrichtung angeordnet sind. In dem Beispiel ist ein Einlaufmodul 2 ersichtlich, in welches der vorgeformte Rohling 7 eingeführt werden kann, und welche diesen Rohling zu den Vorzentriermodulen 3 weiterbefördert. Das Einlaufmodul kann z.B. angetriebene Förderbänder 40 und 41 umfassen, welche den Rohling erfassen und diesen in Richtung auf die Vorzentriermodule 3 fördern. Auf das Einlaufmodul 2 folgt mindestens ein Vorzentriermodul 3, bzw. im gezeigten Beispiel drei solcher Module, von denen jedes Beaufschlagungswerkzeuge für den Rohling aufweist, welche zu dessen Zentrierung und Formgebung vor dem Schweissmodul 4 dienen. Auf die Module 3 folgt das Schweissmodul 4, welches eine Laserschweissquelle 27 umfasst sowie Zentrierabschnitte 49 und 50, welche den im Vorzentriermodul vorbereiteten Rohling in die endgültige, für die Schweissung notwendige Lage bringen und unter der Schweisseinrichtung 27 hindurchführen. Im Bereich dieses Moduls können Überprüfungseinrichtungen 10 und 11 vorgesehen sein, welche z.B. auf optischem Weg die Kantenlage des Rohlings vor der Schweissung bzw. die Schweissnaht nach der Schweissung überprüfen und über eine Steuerung auf die Einrichtung einwirken. So kann durch die Betrachtung der Kanten mittels der Prüfeinrichtung 10 auf das Zentriermodul eingewirkt werden, um die Kantenlage für die Schweissung optimal zu gestalten. Durch die Einrichtung 11 kann die fertige Schereissnaht überprüft werden und allenfalls schlecht geschweisste Rohre können am Ausgang der Schweisseinrichtung 1 ausgeschieden werden. Nach der Schweissung werden die Rohre 9 durch ein Ausgabemodul 5 aus der Einrichtung hinaustransportiert. Die einzelnen Module 2, 3, 4 und 5 sind auf der gemeinsamen Tragvorrichtung 6 angeordnet und können auf dieser gegeneinander verschoben werden oder können von dieser entfernt werden. Wie nachfolgend noch beschrieben wird, kann z.B. anstelle des Einlaufmoduls 2 ein weiteres (oder mehrere) Vorzentriermodul 3 vorgesehen sein. Es können auch mehrere Schweissmodule 4 in Bereitschaft gehalten werden, wobei das für die jeweilige Schweissung geeignete Modul 4 in der Einrichtung angeordnet wird. Die Module können auf der Tragvorrichtung 6 auswechselbar und in Längsrichtung verschiebbar und kann starr befestigbar sein oder sie können auf der Tragvorrichtung 6 bewegt werden, um, wie nachfolgend beschrieben wird, spezielle Rohrformen zu schweissen.

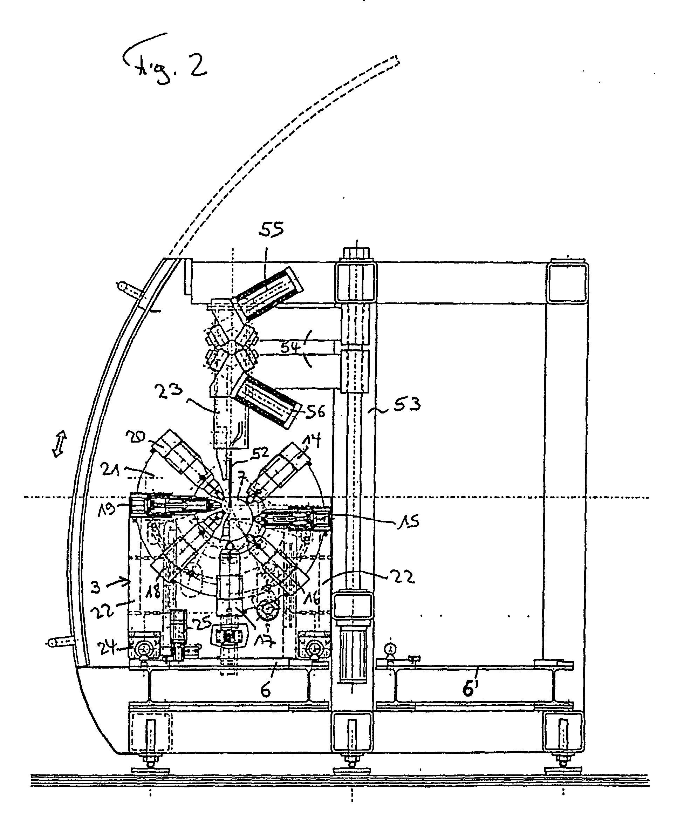

Figur 2 zeigt einen Vertikalschnitt durch die Einrichtung 1 entlang der Linie A-A von Figur 1. Dabei ist die Tragvorrichtung 6 ersichtlich, und das eine Vorzentriermodul 3. Dieses weist in dem gezeigten Beispiel sieben sternförmig angeordnete Beaufschlagungswerkzeuge 14-20 auf, welche den Rohling 7 auf verschiedene Weise, je nach Ausfahrstellung des linear ausfahrbaren Beaufschlagungswerkzeuges beaufschlagen können. In der Figur 2 sind dabei aus zeichnungsökonomischen Gründen und als verschiedene Beispiele für die verschiedenen Werkzeuge 14-20 zwei verschiedene Stellungen dargestellt, welche zwei verschiedenen Rohlingsgrössen entsprechen. Auf der rechten Seite ist für die Werkzeuge 14, 15, 16 und 17 eine Stellung für einen Rohling mit grossem Durchmesser gezeigt und auf der linken Hälfte der Figur für die Werkzeuge 20, 19, 18 und angedeutet auch noch 17 eine Stellung gezeigt, bei welchem der Rohling nur einen geringen Durchmesser hat. Oberhalb des Abschnittes des Moduls mit den Werkzeugen 14-20 ist ein Richtwerkzeug 23 gezeigt, welches ein in den Rohling eintauchendes Richtelement 52 aufweist, welches auch als Schwert bezeichnet werden kann. Die Funktion dieses Elementes im Zusammenspiel mit den Werkzeugen 14-20 wird anhand einer weiteren Figur näher erläutert. Das Modul 3 weist weiter eine Halterung 22 und 21 für die Werkzeuge 14-20 auf. Eine Halterung 53 und 54 ist für das Schwert 52 bzw. dessen Antrieb 55 und 56 vorgesehen, welche sich über alle drei Module 3 erstreckt. Das Modul 3 ruht mittels Halterungen 24 auf der Tragvorrichtung 6. Parallel zu der Tragvorrichtung 6 kann eine weitere Tragvorrichtung 6' vorgesehen sein, welche Module aufnehmen kann, die als Reservemodule oder zusätzliche Module zum Einsatz kommen können. Dabei sind die Module bzw. die Tragvorrichtungen 6 und 6' so ausgestaltet, dass die Module zwischen diesen Tragvorrichtungen hin und zurück verschoben werden können.

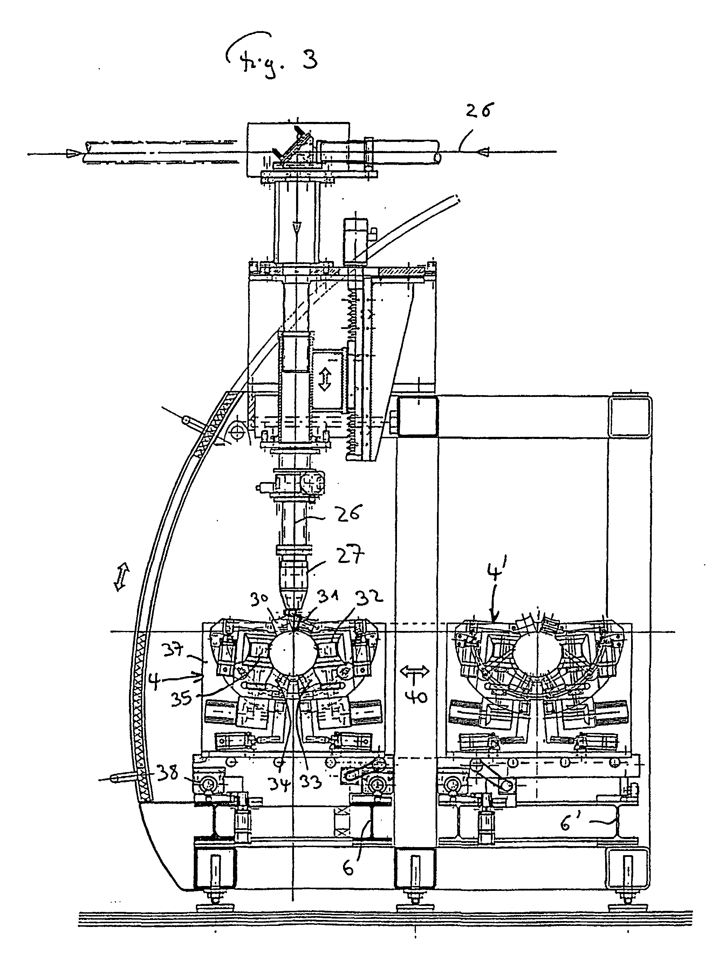

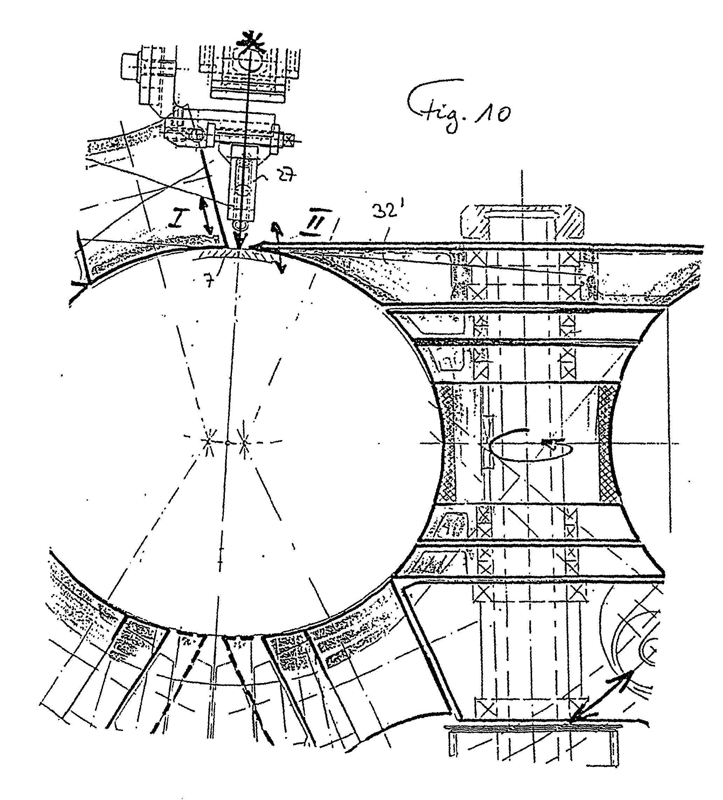

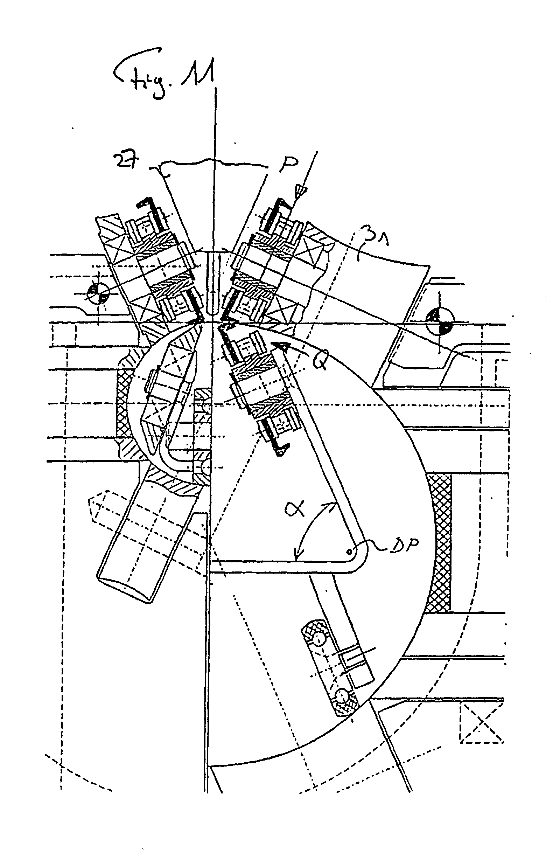

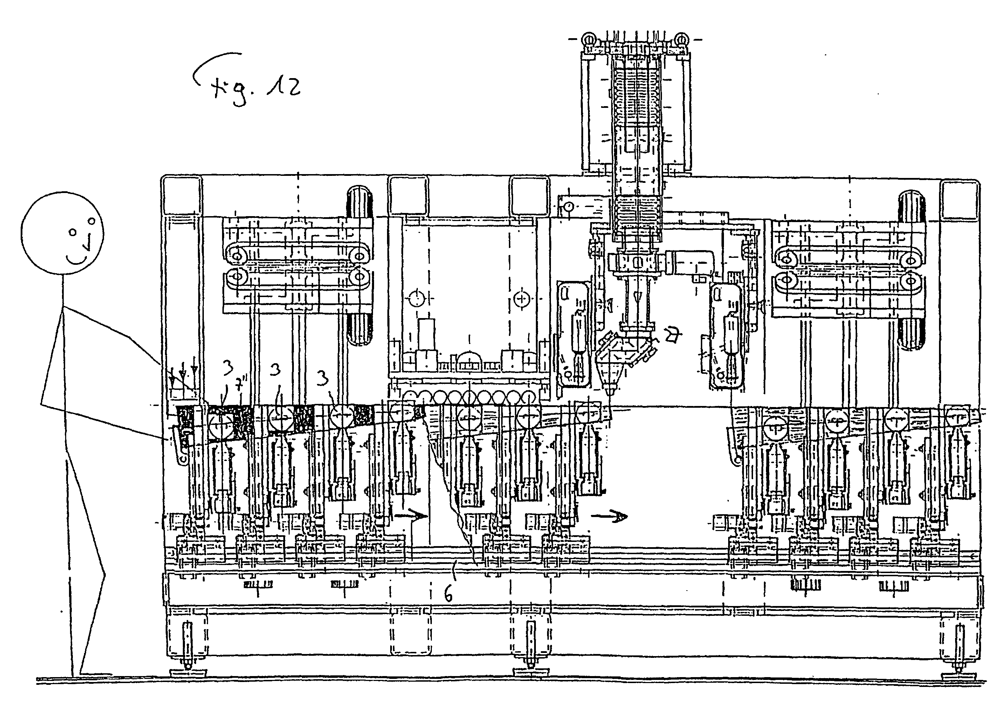

Figur 3 zeigt einen Schnitt durch die Einrichtung 1 von Figur 1 entlang der Linie B-B, wobei die Kantenüberwachungseinrichtung 10 nicht dargestellt ist. In Figur 3 wird somit das Zentrier- und Schweissmodul 4 ersichtlich, wobei ein weiteres solches Modul 4' auf der Tragvorrichtung 6' angeordnet ist, derart, dass es mit dem Modul 4 auf einfache Weise durch Verschieben gemäss dem Pfeil 40 ausgetauscht werden könnte. Im gezeigten Beispiel wird dabei nur der untere Teil des Moduls mit den Zentrierwerkzeugen ausgetauscht. Es könnte aber auch so sein, dass auch die Schweisseinrichtung 27, welche im vorliegenden Fall einen Laserstrahl 26 aus einer Laserquelle beinhaltet, mitausgetauscht wird. Im gezeigten Beispiel weist das Zentriermodul zwei hintereinanderliegende Sätze 49, 50 (Fig. 1) von Rollen auf, von denen der Satz 49 mit den Zentrierrollen 30-35 in Figur 9 ersichtlich ist. Die Rollen bilden einen Rollenkranz um den Rohling herum, um diesen mit korrekter Kantenlage für das Schweissen der Schweisseinrichtung 27 mit dem Laserstrahl 26 zuführen. Dabei können einzelne der Rollen oder können Gruppen von Rollen verstellbar sein, was nachfolgend noch genauer erläutert werden wird. Die Rollen sind an einer Halterung 37 und 38 gehalten, welche Halterung auf der Tragvorrichtung 6 abgestützt ist.

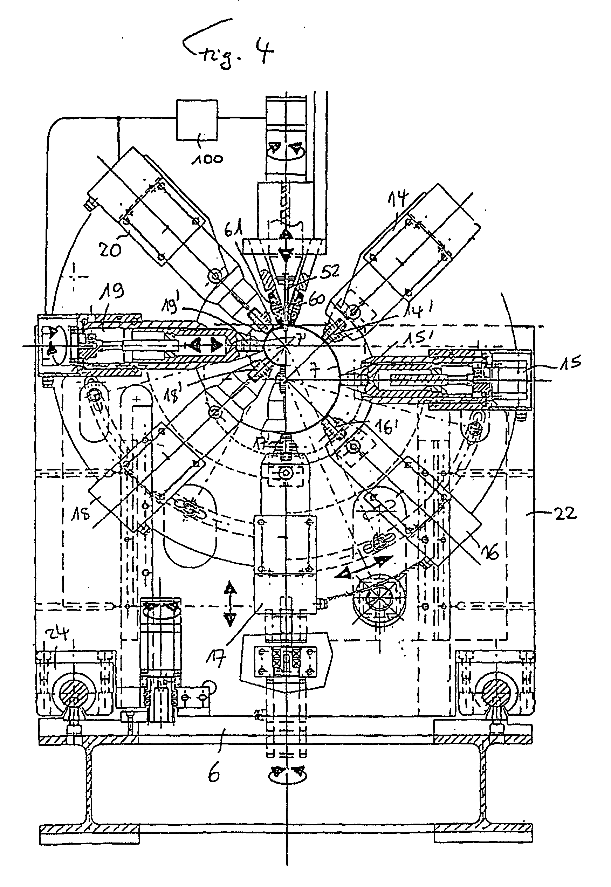

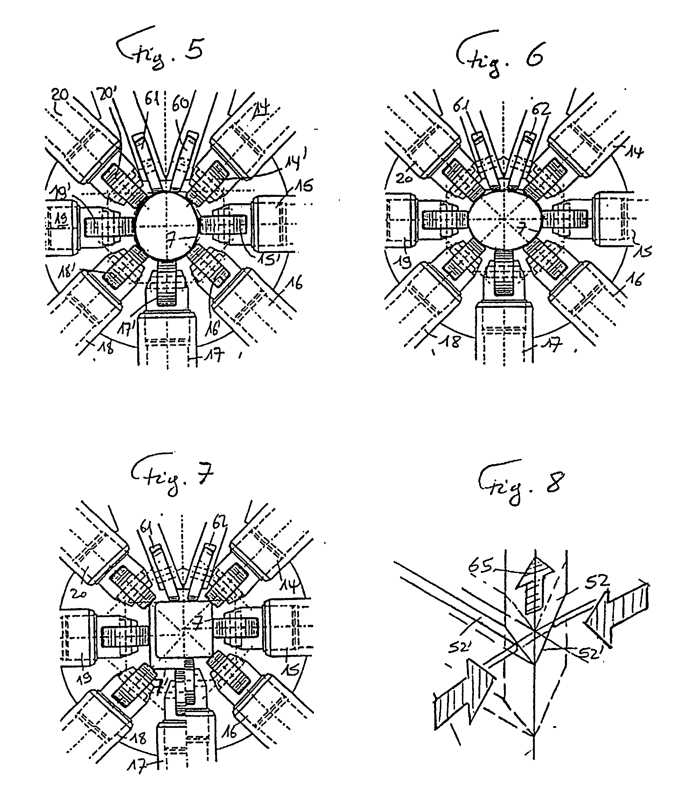

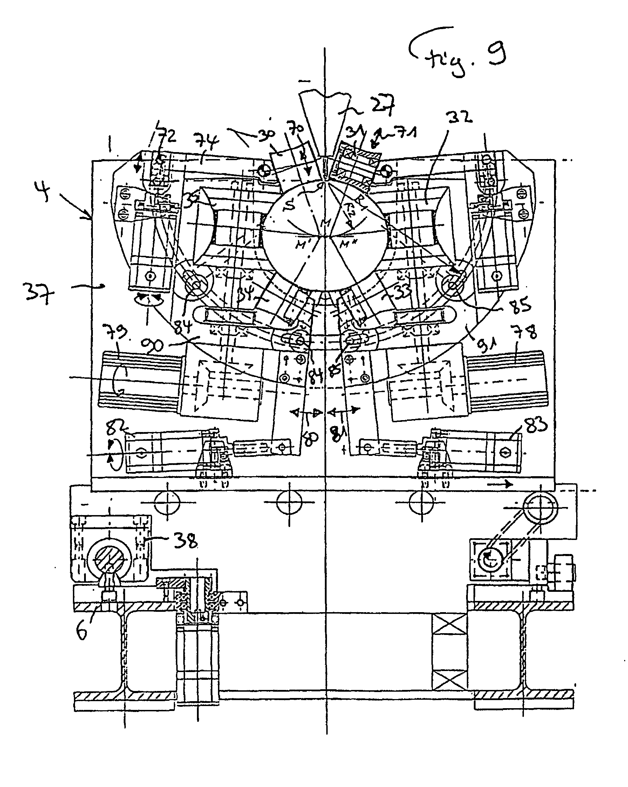

Figur 4 zeigt in genauerer Darstellung einen Abschnitt des Vorzentriermoduls 4, welches auf der Haltevorrichtung 6 abgestützt ist, wobei gleiche Bezugsziffern wie bis anhin verwendet gleiche Teile bezeichnen. Die einzelnen Beaufschlagungswerkzeuge 14-20 weisen dabei einen Beaufschlagungskopf 14'-20' auf, welcher z.B. von einer Rolle gebildet wird, und welcher in Längsachse des Werkzeuges weiter nach vorne verfahren oder wieder zurück verfahren werden kann. Je nach Stellung dieser Rollen 14'-20' ergibt sich eine Durchlassöffnung für den Rohling, welche eine andere Form und andere Grösse aufweist. In Figur 4 ist dies wiederum in der rechten Hälfte für einen Rohling 7 mit grossem Durchmesser und in der linken Hälfte für einen Rohling 7' mit kleinerem Durchmesser dargestellt. Die einzelnen Werkzeuge 14-20 können z.B. einen drehenden Elektroantrieb aufweisen, welcher den Werkzeugkopf mittels einer Spindel mehr oder weniger nach vorne oder zurück verfährt. Auch ein Linearantrieb ist möglich. Die einzelnen Werkzeuge werden durch eine gemeinsame Steuerung (in der Zeichnung durch den Block 100 angedeutet) so gesteuert, dass sich eine gewünschte Durchlassöffnung ergibt. Durch dieses Vorzentrierwerkzeug kann daher grundsätzlich die Grösse und Form des Rohlings in weiten Grenzen vorgegeben werden. Figur 5 zeigt entsprechend die von den Beaufschlagungswerkzeugen 14-20 bzw. deren Rollen 14'-20' vorgegebene Durchlassöffnung für ein oval zu schweissendes Rohr. Figur 6 zeigt die entsprechende Durchlassöffnung für einen in liegender Position angeordneten ovalen Rohling, während Figur 7 die Stellung für einen im wesentlichen rechteckigen Rohling 7 bzw. für einen grösseren rechteckigen Rohling 7' ebenfalls wieder in eine linke Zeichnungshälfte und eine rechte Zeichnungshälfte getrennt für verschiedene Werkzeugstellungen zeigt. In Figur 4 ist weiter ersichtlich, dass ein Richtwerkzeug 52 in den noch geöffneten Rohling 7 eintaucht. In Figur 8 wird dies näher erläutert, wobei das Richtwerkzeug bzw. Schwert 52 zwei aufeinander zulaufende Kanten 52' aufweist, an welchen die Kanten des Rohlings 7 anliegen. Das Richtwerkzeug 52 bildet damit einen Anschlag für die Kanten des Rohlings 7, wobei dieser Anschlag in Richtung des Pfeils 65 nach oben weggezogen wird, wenn die Kanten des Rohlings 7 durch die Beaufschlagungswerkzeuge 14 aufeinander zu bewegt werden. Vorzugsweise sind weiter neben dem Schwert 52 beidseits desselben Rollen 60 und 61 vorgesehen, welche z.B. auch magnetisch sein können und die Kanten des Rohlings magnetisch anziehen, und zusammen mit dem Schwert 52 eine definierte Lage der Kanten bewirken. Das Schwert 52 wird dabei sukzessive aus dem Rohling herausgezogen, so dass sich im Vorzentrierwerkzeug eine Stumpflage der Kanten des Rohlings 7 ausbildet. Das Vorzentriermodul erlaubt damit auf einfache Weise die Vorzentrierung von Rohlingen für die verschiedensten Rohrformen und Rohrdurchmesser, ohne dass die Rohrschweisseinrichtung 1 dazu umgerüstet werden müsste. Es genügt über die Steuerung der Beaufschlagungswerkzeuge 14-20 den entsprechenden Durchmesser und die Form des Rohlings vorzugeben. Sofern ein Rohling geschweisst werden muss, welcher den Einstellbereich der Module 3 übersteigt, so können die Module 3 durch andere Module, welche einen anderen Einstellbereich aufweist, ausgetauscht werden, wobei die anderen Module auf der Reserveträgereinheit 6' vorgesehen sein können, so dass der Austausch schnell ausgeführt werden kann.

Figur 9 zeigt eine Ansicht des Zentrier- und Schweissmoduls, wobei die Schweisseinrichtung 27 nur teilweise dargestellt ist. Das Modul 4 weist die genannten kranzförmig angeordneten Rollen 30-35 auf, welche den zu schweissenden Rohling 7 umgeben und die Zentrierung für die Schweissung bewirken. Vorzugsweise sind nun die Rollen 30 und 31 in Richtung des Pfeiles 70 bzw. 71 um einen geringen Betrag angetrieben verstellbar, um die Stumpflage der gegenüberliegenden Kanten des Rohlings 7 im Schweissbereich direkt beeinflussen zu können. Dies kann z.B. aufgrund des Ausgangssignals der Überwachungseinheit 10 (Figur 1) erfolgen. So kann z.B. die Rolle 30 durch Schwenken des Arms 74 um die Schwenkachse 72 verstellt werden, was mittels des Antriebsmotors 73 erfolgen kann. Die Verstellung der Rolle 31 erfolgt durch einen analogen Antrieb. Durch die Verstellung der Rollen 30 und 31 kann bewirkt werden, dass die Kanten des Rohlings mit Sicherheit nicht zum Schweissstrahl hin V-förmig auseinanderklaffen, was einer guten Schweissung abträglich ist, sondern genau parallel zueinander stehen oder allenfalls V-förmig nach unten offen auseinanderklaffen, was für die Laserschweissung ebenfalls geeignet ist.

Das kranzförmige Zentrierwerkzeug mit den Rollen 30-35 kann aber alternativ oder zusätzlich auf weitere Weise zur Beeinflussung des Rohlings eingesetzt werden. So kann das Werkzeug z.B. aus zwei Hälften bestehen, wobei die eine Hälfte die Rollen 31, 32 und 33 aufweist und die andere Hälfte die Rollen 30, 34 und 35. Die Rollen 32 und 33 können dabei mittels eines Antriebs 78 bzw. 79 drehend angetrieben werden, um den Durchlauf des Rohlings durch das Zentriermodul zu bewirken. Die beiden Hälften des Zentrierwerkzeugs können nun aber um einen Drehpunkt S zueinander verschwenkt werden, wie das mit den Pfeilen 80 und 81 angedeutet ist. Die Verschwenkung kann entsprechend mit den Antrieben 82 und 83 bewirkt werden. Dieses schwenkweise Öffnen bzw. Schliessen des Zentrierwerkzeuges um den Rohling herum ermöglicht eine weitere Beeinflussung desselben im Zentrier- und Schweisswerkzeug zur Beeinflussung der Kantenlage und damit zur Erzielung einer qualitativ guten Schweissung. Die hälftigen Halterungen 90 und 91 für die Rollen können dabei in Schlitzführungen 84 und 85 der Halterung 7 geführt sein, um die Schwenkbewegung der beiden Hälften zueinander hin oder voneinander weg zu ermöglichen.

Figur 10 zeigt eine alternative Ausführungsform zu der verschiebbaren Rolle 30, bzw. 31. In diesem Fall ist eine Rolle 32' vorgesehen, welche die Rolle 32 und die Rolle 31 von Figur 9 ersetzt (eine entsprechende Rolle wäre in der linken Hälfte der Figur vorgesehen und würde die Rollen 30 und 35 ersetzen. Der obere Teil 95 der Rolle 32' kann in der Längsachse der Rolle so nach oben oder unten bewegt werden, dass sich ebenfalls eine Einwirkung auf den Rohling in dessen Schweissbereich ergibt, um die Kantenlage in der bereits beschriebenen Weise zu verändern,

Figur 11 zeigt eine Innenabstützung im Schweissbereich.

Figur 12 zeigt eine Seitenansicht einer Schweisseinrichtung 1', bei welcher kein Einlaufmodul 2 vorgesehen ist. Das Zentrier- und Schweissmodul ist in abgewandelter Form vorgesehen, indem der Zentrierteil von der Trageinheit 6 entfernt worden ist und nur noch der Schweissteil 27 vorgesehen ist. Die jeweiligen Vorzentriermodule 3 können nun so eingestellt werden, dass, wie gezeigt, ein konisch geformter Rohling 7" durch die Beschaufschlagungswerkzeuge geformt und zentriert wird. Die entsprechenden, jeweils einen Rohling haltenden und zentrierenden Werkzeuge sind dabei miteinander gekoppelt und werden in dieser miteinander gekoppelten Lage durch die Einrichtung 1' verfahren, was in der Zeichnung mit verschiedenen Stellungen des selben Rohlings 7" angedeutet ist. Die konischen Rohlinge passieren dabei in den Vorzentriermodulen gehalten die Schweisseinrichtung und werden dort geschweisst. Nach dem Passieren der Schweisseinrichtung 27 kann das konisch geschweisste Rohr aus den gekoppelten Vorzentriermodulen entnommen werden und diese werden wieder zurück gefahren, um mit dem nächsten konischen Rohling 7" beschickt zu werden.

## Patentansprüche

1. Verfahren zum Schweissen von vorgebogenen Rohlingen (7, 7'; 7") zu Rohren (9), insbesondere von dünnwandigen Rohlingen mit einem Verhältnis von Durchmesser zu Materialdicke des Rohres von grösser gleich 65, **dadurch gekennzeichnet, dass** zur Vorpositionierung der zu schweissenden Kanten der jeweilige Rohling an mehreren Stellen seines Umfanges gleichzeitig von individuell im wesentlichen auf die Längsachse des Rohlings hin oder von dieser weg angetrieben verstellbaren Werkzeugen (14-20) so beaufschlagt wird, dass die Längskanten des Rohlings zur Anlage aneinander gebracht werden.

2. Verfahren nach Anspruch 1, **dadurch gekennzeichnet, dass** während der Vorpositionierung im Kantenbereich ein Richtwerkzeug (52) in den Rohling eintaucht und mindestens eine Anlageebene (52') für mindestens eine der Kanten bildet, vorzugsweise aber je eine Anlageebene für beide Kanten, und dass dieses Richtwerkzeug sukzessive aus dem Rohling herausbewegt wird.

3. Verfahren nach Anspruch 2, **dadurch gekennzeichnet, dass** das Herausbewegen des Richtwerkzeuges (52) mit einer Bewegung mindestens eines der Beaufschlagungswerkzeuge (14-20) gekoppelt ist.

4. Verfahren nach einem der Ansprüche 1 bis 3, **dadurch gekennzeichnet, dass** im Bereich der Kanten des Rohlings mindestens ein magnetisches Werkzeug (60, 61) zum magnetischen Anziehen der Kanten des Rohlings gegen das Werkzeug vorgesehen ist.

5. Verfahren nach Anspruch 1, **dadurch gekennzeichnet, dass** entlang der Länge des Rohlings mehrere Sätze von Beaufschlagungswerkzeugen (14-20) als Vorzentriermodule (3) vorgesehen sind.

6. Verfahren nach Anspruch 5, **dadurch gekennzeichnet, dass** die Vorzentriermodule (3) in Längsrichtung des Rohlings relativ zueinander verstellbar sind.

7. Verfahren nach Anspruch 5, **dadurch gekennzeichnet, dass** die Vorzentriermodule (3) miteinander koppelbar und derart gemeinsam verfahrbar sind.

8. Verfahren nach Anspruch 1, **dadurch gekennzeichnet, dass** zur Positionierung der Kanten des Rohlings beim Schweisswerkzeug (27) mindestens ein angetrieben verstellbares Element (30, 31; 32-35) eingesetzt wird, durch welches die Kantenlage vor dem Schweisswerkzeug in Abhängigkeit von einer Erkennungseinrichtung (10) für die Kantenlage verändert wird.

9. Verfahren nach Anspruch 8, **dadurch gekennzeichnet, dass** verstellbare Elemente von den am nächsten bei den Kanten liegenden Rollen (30, 31) eines den Rohling umgebenden Rollenkranzes (30-35) gebildet werden.

10. Verfahren nach Anspruch 8, **dadurch gekennzeichnet, dass** die Elemente von mehrere Rollen (32, 33; 34, 35) umfassenden Abschnitten eines den Rohling umgebenden Rollenkranzes gebildet werden.

11. Verfahren nach Anspruch 1, **dadurch gekennzeichnet, dass** bei der Schweissung des Rohlings eine Innenabstützung des Rohlings beidseits der aneinanderstossenden Kanten des Rohlings erfolgt.

12. Vorzentriermodul (3) zur Durchführung des Verfahrens nach Anspruch 1 bzw. Für eine für eine Einrichtung zum Schweissen von vorgeformten Rohren **dadurch gekennzeichnet, dass** dieses eine Halterung (21, 22, 24) für eine Mehrzahl von Beaufschlagungswerkzeugen (14-20) aufweist, welche eine Durchlassöffnung bilden und einzeln oder gruppenweise angetrieben im wesentlichen auf das Zentrum der Durchlassöffnung hin oder von diesem Weg verfahrbar sind.

13. Vorzentriermodul nach Anspruch 12, **dadurch gekennzeichnet, dass** dieses ein auf das Zentrum hin oder von diesem weg angetrieben verfahrbares Richtwerkzeug (52) aufweist, welches mindestens eine Anschlagfläche (52') aufweist.

14. Vorzentriermodul nach Anspruch 13, **dadurch gekennzeichnet, dass** die Antriebe mindestens eines Beaufschlagungswerkzeuges und des Richtwerkzeuges über eine Steuereinrichtung gekoppelt sind.

15. Vorzentriermodul nach Anspruch 12, **dadurch gekennzeichnet, dass** dieses mindestens ein magnetisches Werkzeug (60, 61) aufweist, welches dem Richtwerkzeug (52) benachbart angeordnet ist.

16. Vorzentriermodul nach Anspruch 12, **dadurch gekennzeichnet, dass** es Koppelungselemente zur Koppelung mit weiteren Modulen aufweist.

17. Einrichtung zur Durchführung des Verfahrens nach Anspruch 1, **gekennzeichnet durch** einen modularen Aufbau mit mindestens einem
- Vorzentriermodul (3) nach Anspruch 12, sowie mindestens einem
- Zentrier- und Schweissmodul (4),
wobei die Module auswechselbar und zueinander verstellbar auf einer gemeinsamen Trägereinheit (6) angeordnet sind.

18. Einrichtung nach Anspruch 17, **dadurch gekennzeichnet, dass** vor dem Vorzentriermodul ein Einlaufmodul (2) vorgesehen ist.

19. Einrichtung nach Anspruch 17 oder 18, **dadurch gekennzeichnet, dass** Module miteinander koppelbar sind und/oder dass Module auf der Trägereinheit (6, 6') aus der Arbeitsposition in eine Warteposition und zurück bringbar sind.

20. Einrichtung nach Anspruch 17, wobei das Zentrier- und Schweissmodul (4) mit mindestens einem Kranz mit rollenförmigen Werkzeugen (30-35) versehen ist, welche einen Durchlass bilden, und dass mindestens ein angetrieben verstellbares Kranzelement (30, 31; 32-35) vorgesehen ist.

21. Einrichtung nach Anspruch 20, **dadurch gekennzeichnet, dass** als verstellbare Kranzelemente zwei beidseits des Schweissstrahles (26) liegende Rollen (30, 31) vorgesehen sind, welche derart verstellbar sind; dass die Form des Durchlasses im Schweissbereich beeinflussbar ist.

22. Einrichtung nach Anspruch 20, **dadurch gekennzeichnet, dass** als verstellbare Kranzelemente zwei Abschnitte des Kranzes (32, 33; 34, 35) um beidseits der Schweissstrahllängsachse liegende Drehpunkte verschwenkbar angeordnet sind.

23. Einrichtung nach Anspruch 20 mit mindestens einem Kranz mit rollenförmigen Werkzeugen, welche einen Durchlass bilden, und dass innerhalb des Durchlasses eine Innenabstützung angeordnet ist.

## Claims

1. A method of welding pre-curved blanks (7, 7'; 7") to form tubes (9), particularly thin-walled blanks with a ratio of the diameter to the material thickness of the tube of greater. than or equal to 65, **characterised in that** in order to pre-position the edges which are to be welded, the blank concerned is contacted simultaneously at a plurality of locations on its periphery by tools (14-20) which can be individually adjusted and driven substantially towards the longitudinal axis of the blank or away from the latter so that the longitudinal edges of the blank are brought into contact with each other.

2. A method according to claim 1, **characterised in that** during the pre-positioning operation a straightening tool (52) enters the blank in the edge region thereof and forms at least one plane of contact (52') for at least one of the edges, but preferably forms a plane of contact for each of both the edges, and that said straightening tool is gradually moved out of the blank.

3. A method according to claim 2, **characterised in that** the outward movement of the straightening tool (52) is coupled with a movement of at least one of the contact tools (14-20).

4. A method according to any one of claims 1 to 3, **characterised in that** at least one magnetic tool (60, 61) is provided in the region of the edges of the blank for magnetically attracting the edges of the blank towards the tool.

5. A method according to claim 1, **characterised in that** a plurality of sets of contact tools (14-20) is provided along the length of the blank as pre-centring modules (3).

6. A method according to claim 5, **characterised in that** the pre-centring modules (3) can be adjusted in relation to reach other in the longitudinal direction of the blank.

7. A method according to claim 5, **characterised in that** the pre-centring modules (3) can be coupled to each other and in this manner can be moved jointly.

8. A method according to claim 1, **characterised in that** in order to position the edges of the blank at the welding tool (27) at least one driven adjustable element (30, 31; 32-35) is used, by which the position of the edge in front of the welding tool is varied depending on a recognition device (10) for the edge position.

9. A method according to claim 8, **characterised in that** adjustable elements are formed by the rollers (30, 31), which are situated nearest the edges, of a roller collar (30-35) which surrounds the blank.

10. A method according to claim 8, **characterised in that** the elements are formed by sections of a roller collar which surrounds the blank, which sections comprise a plurality of rollers (32, 33; 34, 35).

11. A method according to claim 1, **characterised in that** during the welding of the blank the latter is supported internally on both sides of the abutting edges of the blank.

12. A pre-centring module (3) for carrying out the method according to claim 1 or for a device for welding pre-formed tubes, **characterised in that** said module comprises a holding device (21, 22, 24) for a multiplicity of contact tools (14-20) which form a passageway opening and which can be moved, by driving them individually or in groups, substantially towards the centre of the passageway opening or away from the latter.

13. A pre-centring module according to claim 12, **characterised in that** it comprises a moveable straightening tool (52) which can be driven towards the centre or away from the latter and which comprises at least one contact face (52').

14. A pre-centring module according to claim 13, **characterised in that** the drives of at least one contact tool and of the straightening tool are coupled via a controller.

15. A pre-centring module according to claim 12, **characterised in that** it comprises at least one magnetic tool (60, 61) which is disposed adjacent to the straightening tool (52).

16. A pre-centring module according to claim 12, **characterised in that** it comprises coupling elements for coupling to further modules.

17. A device for carrying out the method according to claim 1, **characterised by** a modular construction comprising at least one
- pre-centring module (3) according to claim 12, as well as at least one
- centring and welding module (4),
wherein the modules are disposed on a common support unit (6) so that they are interchangeable and adjustable in relation to each other.

18. A device according to claim 17, **characterised in that** a feeder module (2) is provided upstream of the pre-centring module.

19. A device according to claim 17 or 18, **characterised in that** modules can be coupled to each other and/or that modules on the support unit (6, 6') can be brought from the working position into a standby position and back.

20. A device according to claim 17, wherein the centring and welding module (4) is provided with at least one collar having roller-like tools (30, 35) which form a passage, and that at least one driven, adjustable collar element (30, 31; 32-35) is provided.

21. A device according to claim 20, **characterised in that** two rollers (30, 31) situated on both sides of the welding beam (26) are provided as adjustable collar elements, and said rollers can be so that the shape of the passage in the welding region can be influenced.

22. A device according to claim 20, **characterised in that** two sections of the collar (32, 33; 34, 35), which can pivot about fulcrums situated on both sides of the longitudinal axis of the welding beam, are provided as adjustable collar elements.

23. A device according to claim 20, comprising at least one collar having roller-like tools which form a passage, wherein an internal support is disposed inside the passage.

## Revendications

1. Procédé de soudage d'ébauchés pré-cintrées (7, 7'; 7") en tubes (9), notamment d'ébauches à paroi mince avec un rapport du diamètre à l'épaisseur de matière du tube supérieur ou égal à 65, **caractérisé en ce que** pour le pré-positionnement des arêtes à souder de l'ébauche respective en plusieurs endroits de sa périphérie, on charge simultanément des outils réglables (14-20), pouvant être entraînés individuellement en les rapprochant ou en les écartant de l'ébauche sensiblement sur l'axe longitudinal de celle-ci, en sorte que les arêtes longitudinales de l'ébauche sont amenées en appui l'une contre l'autre.

2. Procédé selon la revendication 1 **caractérisé en ce que**, pendant le pré-positionnement dans la zone des arêtes, un outil redresseur (52) s'enfonce dans l'ébauche et forme au moins un plan d'appui (52') pour au moins l'une des arêtes, mais de préférence un plan d'appui pour les deux arêtes, et **en ce que** cet outil redresseur est extrait successivement de l'ébauche.

3. Procédé selon la revendication 2 **caractérisé en ce que** le mouvement de l'outil redresseur (52) est couplé à un mouvement d'au moins l'un des outils de charge (14 - 20).

4. Procédé selon l'une des revendications 1 à 3 **caractérisé en ce que** dans la zone de l'ébauche il est prévu au moins un outil magnétique (60, 61) pour l'attraction magnétique des arêtes de l'ébauche contre l'outil.

5. Procédé selon la revendication 1 **caractérisé en. ce que** plusieurs groupes d'outils de charge (14 - 20) sont prévus comme modules de pré-centrage (3) sur la longueur de l'ébauche.

6. Procédé selon la revendication 5 **caractérisé en ce que** les modules de pré-centrage (3) sont réglables relativement l'un à l'autre dans la direction longitudinale de l'ébauche.

7. Procédé selon la revendication 5 **caractérisé en ce que** les modules de pré-centrage (3) sont accouplés l'un à l'autre et de cette façon sont déplaçables en commun.

8. Procédé selon la revendication 1 **caractérisé en ce que** pour le positionnement des arêtes de l'ébauche près de l'outil de soudage (27), on insère au moins un élément entraîné réglable (30, 31 ; 32 - 35), par lequel on modifie l'état de l'arête en amont de l'outil de soudage en fonction d'un dispositif de reconnaissance (10) de l'état de l'arête.

9. Procédé selon la revendication 8 **caractérisé en ce que** l'élément réglable est constitué par les rouleaux (30, 31 situés le plus près des arêtes d'une couronne de rouleaux (30 - 35) entourant l'ébauche.

10. Procédé selon la revendication 8 **caractérisé en ce. que** les éléments sont constitués par plusieurs rouleaux (32, 33, 34, 35) comportant des sections d'une couronne de rouleaux entourant l'ébauche.

11. Procédé selon la revendication **caractérisé en ce que** lors du soudage de l'ébauche, il se produit un appui interne de l'ébauche sur les deux côtés des arêtes de l'ébauche mises bout à bout l'une contre l'autre

12. Module de pré-centrage (3) pour la mise en oeuvre du procédé selon la revendication 1 ou pour un dispositif de soudage de tubes préformés, **caractérisé en ce que** celui-ci comporte une bride de support (21, 22, 24) d'une multiplicité d'outils de charge (14 - 20), qui délimitent une ouverture de passage et qui sont entraînés individuellement ou en groupes sensiblement vers le centre de l'ouverture de passage, et sont déplaçables en va-et-vient sur ce trajet.

13. Module de pré-centrage selon la revendication 12 **caractérisé en ce que** celui-ci comporte un outil directionnel (52) déplaçable, entraîné vers le centre en va-et-vient sur ce trajet, lequel outil comporte au moins une surface de butée (52').

14. Module de pré-centrage selon la revendication 13 **caractérisé en ce que** les entraînements d'au moins un outil d'actionnement et de l'outil directionnel sont accouplés par l'intermédiaire d'un dispositif de commande.

15. Module de pré-centrage selon la revendication 12 **caractérisé en ce qu'**il comporte au moins un outil magnétique (60 ; 61) qui est disposé au voisinage de l'outil directionnel (52).

16. Module de pré-centrage selon la revendication 12 **caractérisé en ce qu'**il comprend des éléments d'accouplement pour l'accouplement avec d'autres modules.

17. Dispositif pour la mise en oeuvre du procédé selon la revendication 1 **caractérisé par** une construction modulaire comportant au moins un
- module de pré-centrage (3) selon la revendication 12, ainsi qu'au moins un
- module de centrage et de soudage (4),
dans lequel les modules sont échangeables et réglables l'un par rapport à l'autre sur une unité de support commune (6).

18. Dispositif selon la revendication 17 **caractérisé en ce qu**'il est prévu un module d'entrée (2) en amont du module de pré-centrage.

19. Dispositif selon la revendication 17 ou 18 **caractérisé en ce que** les modules sont accouplés l'un à l'autre et/ou **en ce que** les modules peuvent être amenés sur l'unité de support (6, 6') depuis la position de travail dans une position d'attente et inversement.

20. Dispositif selon la revendication dans lequel le module de centrage et de soudage (4) est équipé d'au moins une couronne d'outils (30 - 35) en forme de rouleaux qui délimitent un passage, et en ce qu'il est prévu au moins un élément de couronne (30, 31; 32-35) entraîne et réglable.

21. Dispositif selon la revendication 20 **caractérisé en ce que** deux rouleaux (30, 31) situés des deux côtés du jet de soudure (26) sont prévus comme éléments de couronne réglables, qui sont réglables de façon que l'on puisse influer sur la forme du passage dans la zone de soudage.

22. Dispositif selon la revendication 20 **caractérisé en ce que** deux sections de la couronne (32, 33, 34, 35) sont disposées basculantes comme éléments de couronne réglables autour de points de rotation situés des deux côtés autour de l'axe longitudinal du jet de soudage.

23. Dispositif selon la revendication 20 pourvu d'au moins une couronne munie d'outils en forme de rouleaux, qui définissent un passage, et en ce qu'un appui intérieur est agencé à l'intérieur du passage
